# FASCICULE DE BREVET EUROPEEN

(11) **EP 0 412 867 B1**
(45) Date de publication et mention de la délivrance du brevet: **22.09.1993**
(21) Numéro de dépôt: 90402093.0
(22) Date de dépôt: 20.07.1990
(51) Int. Cl.: B29C 33/62, B26D 7/08

(54) **Procédé de traitement antiadhérent en continu d'un cordon de matière adhésive permanente plus particulièrement d'un adhésif thermofusible à la sortie d'un mélangeur extrudeur ainsi qu'installation permettant la mise en oeuvre de ce procédé et produit ainsi obtenu**
Verfahren und Vorrichtung zur kontinuierlichen Antiadhesivbehandlung eines Klebebandes, insbesondere aus wärmeschmelzbarem, extrudiertem Klebstoff und damit erthaltenes Produkt
Process for the continuous antiadhesive treatment of an adhesive band, especially of a thermoplastic, extruded adhesive, and also the device for its processing and the corresponding product

(30) Priorité: 04.12.1989 FR 8915964; 11.08.1989 FR 8910821
(43) Date de publication de la demande: 13.02.1991
(73) Titulaire: HENKEL FRANCE S.A., 92102 Boulogne Billancourt (Hauts de Seine) (FR)
(72) Inventeur: Mireux, Jean Paul, Saint Gibrien (Marne) (FR)
(74) Mandataire: Cabinet HERRBURGER

(56) Documents cités:
- EP-A- 0 141 087
- EP-A- 0 323 213
- EP-A- 0 338 350
- FR-A- 2 000 139
- FR-A- 2 371 507
- FR-A- 2 601 616

## Description

La présente invention concerne un procédé de traitement anti-adhérent en continu d'un adhésif thermofusible collant en surface.

Dans de nombreux domaines de la chimie industrielle, il est courant d'utiliser des masses adhésives thermofusibles collantes en surface, c'est-à -dire des matériaux qui, à la température de manipulation, généralement la température ambiante, sont caractérisés par un ou plusieurs des critères suivants :
- adhésivité intrinsèque de la masse,
- tack dans les conditions normales de température et de pression,
- sensibilité à la pression,
- changement d'état en surface avec un accroissement de la température (l'été par exemple).

Parmi les documents d'utilisation de tels produits, on peut citer à titre d'exemple, la liste non exhaustive suivante : hygiène (changes complets, articles d'hygiène féminine), collage de structure, assemblages parastructuraux, moquettes destinées aux plages arrière de véhicules, panneaux composites pour le bâtiment, dalles de plafond, revêtements muraux, panneaux pré-assemblés réutilisables, barres de seuil auto-adhésives, fermetures d'enveloppes pelables ou permanentes.

Compte tenu du caractère adhésif permanent de ces matériaux, il est impératif qu'ils subissent un traitement anti-adhérent pour en permettre une manipulation, un transport et un stockage plus aisé.

De plus, ce traitement permet d'éviter une agglomération de plusieurs fragments de ces matériaux ainsi qu'un dépôt d'impuretés sur ces derniers.

Dans ce but, les adhésifs thermofusibles collants en surface sont classiquement livrés dans des barquettes paraffinées et siliconées, ce qui permet d'éviter toute adhésion ; ce mode de conditionnement est, cependant, particulièrement onéreux et peu pratique, étant donné que les barquettes ont en général une contenance comprise entre 500 g et 2 kg, et qu'il n'est pas rare que des utilisateurs doivent "démouler" une grande quantité par jour pouvant atteindre plusieurs tonnes.

Pour remédier à ces inconvénients, on a déjà proposé de faire subir aux adhésifs thermofusibles divers traitements permettant de leur faire perdre leur adhérence en surface et par suite de les conditionner directement en vrac.

On a, par exemple, déjà proposé de coextruder une gaine entourant le produit thermofusible ; la matière de coextrusion peut être, par exemple, du polyéthylène ou un "hot melt" non auto-adhérent compatible avec la formulation du produit extrudé (procédé FULLER).

On a également déjà proposé de protéger des matières adhésives par déposition électrostatique d'une fine couche d'agent anti-adhérent (par électrodéposition d'un produit non auto-adhérent sur les surfaces d'un bloc d'auto-adhésif moulé) (procédé RMC BELIX).

On a également déjà proposé un procédé de pulvérisation d'un "holt melt" non auto-adhérent contenu dans un moule (procédé CECA).

Ces différents processus de traitement présentent toutefois, l'inconvénient d'être onéreux, peu pratiques et souvent difficiles à mettre en oeuvre en continu.

Indépendamment de ce qui précède, on connaît par le document EP-A-0 141 087, un procédé de traitement anti-adhésif en discontinu d'un élastomère destiné en fin de traitement à subir un processus de vulcanisation à l'issue duquel il perd tout caractère collant. Un tel élastomère constitue toutefois un produit intermédiaire fondamentalement différent d'un adhésif thermofusible collant en surface qui est destiné à être commercialisé en l'état.

La présente invention a pour objet de remédier aux inconvénients susmentionnés en proposant un nouveau procédé de traitement anti-adhérent en continu d'un adhésif thermofusible collant en surface.

Conformément à la revendication 1, ce procédé est caractérisé en ce que l'on applique un revêtement d'un agent anti-adhérent compatible avec l'adhésif thermofusible et n'entraînant pas de modification physico-chimique significative de celui-ci sur au moins une partie de la surface d'un cordon de cet adhésif sortant en continu d'un mélangeur extrudeur ou d'une filière, à une température supérieure à sa température de ramollissement, on refroidit le cordon ainsi revêtu puis on le découpe à la longueur souhaitée et on conditionne directement les fragments ainsi obtenus,, sans prendre de précautions supplémentaires.

Il est à noter que de manière générale la température d'un cordon d'adhésif thermofusible sortant en continu du mélangeur extrudeur ou de la filière ayant servi à son obtention est de l'ordre de 60 à 90°C.

L'invention permet bien entendu le traitement de tous adhésifs thermofusibles collants en surface ; parmi les matières pouvant être traitées, on peut à titre d'exemple mentionner les composés énumérés ci-après :
- formulations à base d'EVA, de copolymères styrène-butadiène-styrène, SBS, styrène-isoprène-styrène SIS ;
- formulations à base de résines et dérivés (par exemple les résines de colophane, de coumarone, d'Indènes, d'hydrocarbures aliphatiques et aromatiques) ;
- formulations à base de copolymère-styrène-éthylène butylène SEB, styrène-éthylène-butylène-styrène SEBS,
- formulations à base de copolymères vinyliques partiellement cristallins ;
- formulations à base de polyesters, de polyamides ;
- d'une façon plus générale, toutes les formulations issues de la combinaison des polymères, copolymères, polycondensats et copolycondensats mentionnés ci-dessus constitués éventuellement de termonomères de natures diverses.

Conformément à l'invention, le refroidissement du cordon est généralement effectué dans de l'eau refroidie à environ 5° C en une ou deux étapes ; l'application du revêtement d'agent anti-adhérent peut selon les cas être effectuée en amont du refroidissement et/ou entre les deux étapes de refroidissement.

La longueur des bacs de refroidissement ainsi que la température du produit traité à leur sortie dépendent de la texture de celui-ci ainsi que de son comportement rhéologique et également de sa géométrie. Il est en effet à noter que le cordon réalisé en continu au moyen de la vis d'extrusion et mis en forme dans la filière, peut avoir une géométrie et des dimensions variables, mais toujours contrôlées par l'utilisateur. Cependant, l'épaisseur du cordon est dans la pratique limitée à environ 3 à 4 mm pour des raisons liées au processus d'extrusion et de façon que lors de l'opération de découpe, celui-ci puisse être refroidi "à coeur" dans tout son volume ; les dimensions des fragments découpés peuvent bien entendu elles aussi varier en fonction des voeux de l'utilisateur.

Les cordons traités ont donc en fait la forme de rubans plats.

Par ailleurs, pour que le procédé conforme à l'invention puisse donner toute satisfaction, il est nécessaire que les fragments une fois découpés, soient revêtus d'agent anti-adhérent sur la totalité de leur surface ; il est par suite impératif de prévoir une opération permettant la protection des tranches.

A cet effet, et selon une autre caractéristique de l'invention , on découpe le cordon revêtu de l'agent anti-adhérent en comprimant la surface de tranchage de façon telle que ses bords adhèrent les uns contre les autres.

Ce "rabattement" des "lèvres" de tranchage les unes contre les autres, permet de supprimer toute surface de tranchage non revêtue d'agent anti-adhérent, et donc de conditionner sans protection préalable les fragments découpés sans risque d'agglomération au niveau des tranches.

Conformément à l'invention, il est possible, pour effectuer l'application du revêtement anti-adhérent sur la surface du cordon, de choisir entre plusieurs variantes.

Selon une première de ces variantes, on fait passer le cordon, à sa sortie du mélangeur extrudeur, au travers d'un lit d'agent anti-adhérent fluidisé ou en suspension de manière à déposer une fine couche poudreuse à sa surface.

Les agents anti-adhérents pouvant être utilisés conformément à cette variante doivent être aptes à former un lit fluidisé, être inertes chimiquement vis-à-vis de la masse adhésive et ne pas modifier ses propriétés intrinsèques.

On a ainsi pu obtenir des résultats particulièrement satisfaisants en utilisant, dans ce but, des esters métalliques, notamment des esters choisis dans le groupe formé par les stéarates, les octoates, les éthyl-hexanoates et les oléates ou autres esters d'acide gras saturés ou non.

Ces esters peuvent, notamment être constitués par des esters calciques, et/ou barytiques et/ou aluminiques et/ou zinciques.

Cette liste ne doit, bien entendu, pas être considérée comme étant limitative de l'invention, et d'autres matières poudreuses pourraient être utilisées, à la condition qu'elles satisfassent aux exigences susmentionnées.

Un tel traitement dans un lit fluidisé présente l'avantage de permettre d'obtenir des fragments ayant une esthétique particulièrement satisfaisante ; il présente cependant l'inconvénient d'être onéreux. En outre, les esters métalliques utilisés conformément à cette variante pourraient avoir tendance à migrer dans le produit lors du stockage, ce qui fait qu'après une certaine période, on peut retrouver la caractéristique d'adhésivité de surface initiale.

Pour remédier à ces inconvénients, on a eu l'idée, conformément à une seconde variante de l'invention, de choisir en tant qu'agent anti-adhérent un matériau thermofusible non auto-adhésif.

Bien entendu, un tel agent doit satisfaire également aux impératifs sus-mentionnés, c'est-à-dire d'une part permettre de former une pellicule anti-adhérente à la surface du cordon, et d'autre part, être compatible avec le matériau constitutif de celui-ci, c'est-à-dire n'entraîner aucune modification physico-chimique significative et en particulier aucune séparation de phase lors du traitement. Il est à noter que cette compatibilité est particulièrement importante lorsque les produits sont destinés au domaine de l'hygiène.

Conformément à l'invention, on a obtenu des résultats particulièrement satisfaisants en appliquant un agent anti-adhérent constitué d'un matériau thermofusible non auto-adhésif renfermant de la cire de polyéthylène.

A titre d'exemple de compositions possibles d'un tel agent anti-adhérent, on peut citer une composition contenant approximativement 30 % de cire de polyéthylène et 70 % de copolymère de polypropylène, ou encore une composition contenant environ 30 % de cire de polyéthylène et 70 % de copolymère d'acétate de vinyle ou d'un mélange composé de caoutchoucs synthétiques et de cires.

Ces exemple ne doivent, bien entendu, pas être considérés comme étant limitatifs de l'invention et d'autres agents anti-adhérents pourraient être utilisés à la condition qu'ils satisfassent aux exigences susmentionnées.

Conformément à l'invention, un tel agent anti-adhérent peut être appliqué sur la surface du cordon par pulvérisation. Un tel type de revêtement peut être mis en oeuvre pour un prix de revient peu élevé, nettement inférieur à celui du traitement en lit fluidisé, mais donne un résultat moins satisfaisant. En effet les particules d'agent anti-adhérent ont tendance à se rassembler en écheveaux donnant un aspect de surface irrégulier.

L'avantage principal de ce processus de pulvérisation est en fait lié à la possibilité de traiter les deux faces latérales d'un cordon plat en même temps que la face principale ; l'expérience a en effet montré que le produit pulvérisé "déborde" automatiquement sur les bords du cordon.

A titre d'exemple, et dans le cas particulier dans lequel le refroidissement du cordon est effectué en deux étapes, on s'est rendu compte que l'on pouvait obtenir des résultats particulièrement satisfaisants en pulvérisant l'agent anti-adhérent sur une partie de la surface du cordon en amont de la première étape de refroidissement, et sur la partie restante de cette surface entre les deux étapes de refroidissement.

En fonction de la géométrie du cordon, on peut par exemple envisager de pulvériser le côté "recto" en amont de la première étape de refroidissement, et le côté "verso" entre ces deux étapes.

Malgré ces avantages, le développement d'un tel processus risque d'être freiné par des problèmes liés au risque de bouchage des buses de pulvérisation : il s'agit là en effet d'un problème particulièrement important compte tenu du fait que le procédé fonctionnant en continu, il est impératif d'arrêter immédiatement le déplacement du cordon en cas de colmatage d'une buse, pour empêcher l'encrassement de tout le dispositif, et en particulier des lames de découpe.

Ce problème est en particulier important dans le cas où le traitement du cordon nécessite la mise en oeuvre de plusieurs buses de pulvérisation ce qui correspond au cas général : on peut en effet envisager d'adjoindre une buse de secours à une buse de pulvérisation et de contrôler son fonctionnement, par exemple par détection infrarouge de l'état de surface du cordon en aval de celle-ci ; cependant, notamment des raisons de prix de revient, on ne peut pas envisager d'effectuer un tel contrôle lorsque l'installation comporte plusieurs buses de pulvérisation.

Pour cette raison, on a eu l'idée conformément à l'invention, d'effectuer l'application du revêtement d'agent anti-adhérent sur la surface du cordon par enduction.

A cet effet, et selon une autre caractéristique de l'invention, on fait passer le cordon au-dessus d'au moins un bac de fusion à parois chauffées contenant l'agent anti-adhérent et dans lequel plonge un système d'enduction par cylindre chauffé.

Les bacs de fusion sont des dispositifs connus en eux-mêmes commercialisés par exemple par les sociétés NORDSON, MELTEX, ROBATECH, HOLWEG etc...

Conformément à ce processus, l'agent anti-adhérent contenu dans le bac de fusion est en général chauffé à une température de l'ordre de 100 à 180° C, tandis que la température de chauffe du cylindre enducteur du système d'enduction, également comprise entre environ 100 et 180° C peut, selon les cas, être égale ou différente de celle du bac de fusion. Il est nécessaire de faire en sorte que la température surfacique du cylindre enducteur ne soit pas trop élevée pour ne pas risquer de fondre la surface du cordon. L'expérience a montré que la différence de température existant entre la surface du cylindre enducteur et la surface du cordon doit être inférieure à 10° C.

Un tel processus par enduction présente, l'avantage de permettre d'obtenir des fragments dont l'esthétique est nettement supérieure à celle des fragments obtenus par pulvérisation.

Pour réaliser l'enduction des deux faces principales d'un cordon plat en forme de ruban, on peut envisager de le faire passer au-dessus d'un premier bac de fusion pour effectuer l'enduction sur la première face, avant de le faire tourner sur une roue directrice et de le faire passer au-dessus d'un second bac d'enduction permettant de traiter la seconde face. Bien entendu, et de la manière sus-mentionnée, une étape de refroidissement peut être intercalée entre les deux étapes d'enduction.

Malgré ses avantages sus-mentionnés, ce processus par enduction présente l'inconvénient de ne pas permettre de traiter les faces latérales du cordon.

De plus l'expérience a montré que l'opération consistant à retourner le cordon est particulièrement difficile à mettre en oeuvre.

Pour remédier à cet inconvénient, on a eu l'idée, conformément à l'invention, d'enduire la face principale inférieure du cordon au moyen d'un système d'enduction par cylindre plongeant dans un bac de fusion et de relier ce bac à un circuit muni d'une pompe de circulation et d'une rampe d'application comportant un orifice à partir duquel il est possible de faire tomber sur la face principale supérieure du cordon et de répartir sur celle-ci l'agent anti-adhérent contenu dans le bac. Si la fluidité de l'agent anti-adhérent est insuffisante, il est possible de prévoir en aval de la rampe un organe de raclage permettant d'uniformiser sa répartition sur le cordon. Dans tous les cas, l'agent anti-adhérent circule en circuit fermé et la quantité en excès permet un traitement des faces latérales du cordon avant de retomber automatiquement dans le bac de fusion.

Un tel processus est, en fait, voisin de la technique d'enduction par rideau couramment mise en oeuvre dans le cadre d'opérations de vernissage.

Une autre possibilité permettant de remédier aux inconvénients susmentionnés, consiste, conformément à l'invention, à combiner le processus par pulvérisation et le processus par enduction en effectuant l'application du revêtement d'agent anti-adhérent par pulvérisation sur une partie de la surface du cordon et par enduction sur la partie restante de cette surface.

Il est ainsi possible de traiter simultanément les deux faces principales d'un cordon de faible épaisseur en forme de ruban, l'une (face supérieure) par pulvérisation et l'autre (face inférieure) par enduction ; là encore le produit pulvérisé en excès retombe automatiquement dans le bac de fusion, et déborde sur les côtés du cordon, permettant ainsi de le traiter sur la totalité de sa surface.

Pour éviter les problèmes liés au risque d'encrassement de la buse de pulvérisation, 11 est avantageux d'associer à celle-ci une buse de secours qui est automatiquement mis en oeuvre lorsqu'un détecteur détecte un état de surface défaillant en aval de la buse de pulvérisation, consécutif à un début de colmatage de celle-ci.

Selon les cas, ce traitement combiné peut être effectué soit directement à la sortie de la filière, soit en aval d'un premier bac de refroidissement.

Il convient, en outre, de noter qu'il est avantageux de traiter simultanément plusieurs cordons, ayant une largeur de l'ordre de 5 cm, parallèles ou décalés éventuellement de façon asynchrone.

L'expérience a, par ailleurs, montré qu'il serait souhaitable d'obtenir et de commercialiser en fin de processus des cordons ayant une épaisseur de l'ordre du centimètre donc nettement plus épais que ceux pouvant être obtenus à la sortie de la filière qui présentent l'inconvénient d'être trop mous.

A cet effet, et selon une autre caractéristique de l'invention, on applique le revêtement anti-adhérent sur une seule des faces principales du cordon et l'on assemble au moins deux cordons par leurs faces principales non revêtues qui adhérent ainsi automatiquement l'une sur l'autre de manière à obtenir un cordon d'épaisseur supérieure.

Si l'on veut augmenter encore l'épaisseur du cordon final, il est bien entendu possible d'intercaler entre les cordons revêtus sur une face principale, un ou plusieurs cordons non revêtus.

Cette opération peut être effectuée dans le cas de cordons parallèles en revêtant tous les cordons ou certains d'entre-eux sur l'une de leurs faces et en les rabattant les uns sur les autres ou encore en repliant les cordons sur eux-mêmes dans le sens de la longueur.

Les variantes de processus mentionnées ci-dessus à titre d'exemple, ne doivent pas être considérées comme étant limitatives de l'invention, et on peut également envisager de mettre en oeuvre des variantes autres pouvant, par exemple consister à combiner le processus par pulvérisation et/ou le processus par enduction avec un processus de traitement en lit fluidisé. On a en effet pu constater, lors de la mise en oeuvre de ce dernier procédé, que le revêtement anti-adhérent ne se répartit pas de manière parfaitement homogène sur la surface du cordon : on peut donc envisager de combler les vides existant par un matériau thermofusible non auto-adhésif appliqué par pulvérisation ou par enduction.

Le procédé conforme à l'invention est mis en oeuvre dans une installation comportant un mélangeur extrudeur à filière variable, au moins un poste d'application du revêtement d'agent anti-adhérent, au moins un poste de refroidissement, un poste de découpe des fragments et un poste de conditionnement.

Cette installation permet un débit en continu de fragments découpés en sortie du conditionnement.

Par ailleurs, le poste de découpe comporte un organe de découpe muni d'une lame dont la surface est revêtue d'un produit anti-adhérent de façon à ne pas se heurter à des problèmes d'adhérence à ce niveau.

Cet organe peut avantageusement être constitué par une roue à aubes dont la vitesse de rotation est en rapport différentiel avec la vitesse d'extrusion.

On peut également prévoir des organes de découpe autres, notamment à tranchant en biais (guillotine).

A titre de remarque générale, certaines des étapes de procédé évoquées ci-dessus peuvent être combinées.

Ainsi, on peut combiner l'application de l'agent anti-adhérent par passage dans un lit fluidisé à une application de cet agent par enduction.

Il est également possible de combiner l'application par passage dans un lit fluidisé à l'application par enduction en utilisant notamment un bac de fusion à parois chauffées contenant l'agent anti-adhérent et dans lequel plonge un système d'enduction par cylindre chauffé.

Enfin, sur le plan de l'installation pour la mise en oeuvre du procédé, on peut prévoir un mélangeur extrudeur ou tout autre extrudeur à filière de sortie variable.

Les caractéristiques du procédé, qui fait l'objet de l'invention, seront décrites plus en détail en se référant aux dessins annexés, dans lesquels :
- la figure 1 est un schéma représentant une installation pour la mise en oeuvre d'un procédé d'application en lit fluidisé ;
- la figure 2 est un schéma représentant une installation pour la mise en oeuvre d'un procédé d'application par pulvérisation ;
- la figure 3 est un schéma représentant une Installation pour la mise en oeuvre d'un procédé d'application par enduction ;
- la figure 4 est un schéma représentant schématiquement un poste combiné d'application par pulvérisation et par enduction.

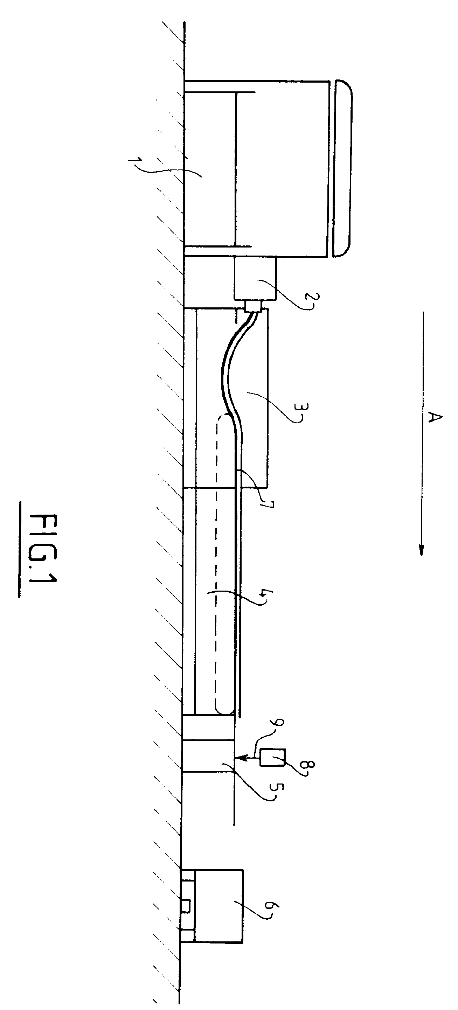

Selon la figure 1, l'installation comporte dans le sens A d'avancement de la matière un mélangeur extrudeur 1 muni à sa sortie d'une filière à calibre variable 2, un poste d'application 3 du revêtement d'agent anti-adhérent, un poste de refroidissement 4, un poste 5 de découpe des fragments et un poste de conditionnement 6.

Le cordon 7 qui sort de la filière 2 à une température supérieure à sa température de ramollissement passe directement, dans le poste 3 au travers d'un lit d'agent anti-adhérent fluidisé ou en suspension dans lequel il est revêtu sur sa surface d'une fine pellicule poudreuse, puis, est dirigé vers le poste de refroidissement 4 avant d'être conduit au poste de découpe 5 dans lequel un organe de découpe 8 le débite en fragments de dimension prédéterminée qui sont ensuite dirigés vers le poste de conditionnement 6.

L'organe de découpe 8 qui est muni d'une lame 9 représentée schématiquement et dont la surface peut être revêtue d'un produit anti-adhérent peut par exemple être constitué par une roue à aubes dont la vitesse de rotation est différentielle à la vitesse d'extrusion ; une telle roue permet d'obtenir simultanément une action de découpe et une action de compression des lèvres permettant d'éliminer toute surface non revêtue d'agent anti-adhérent.

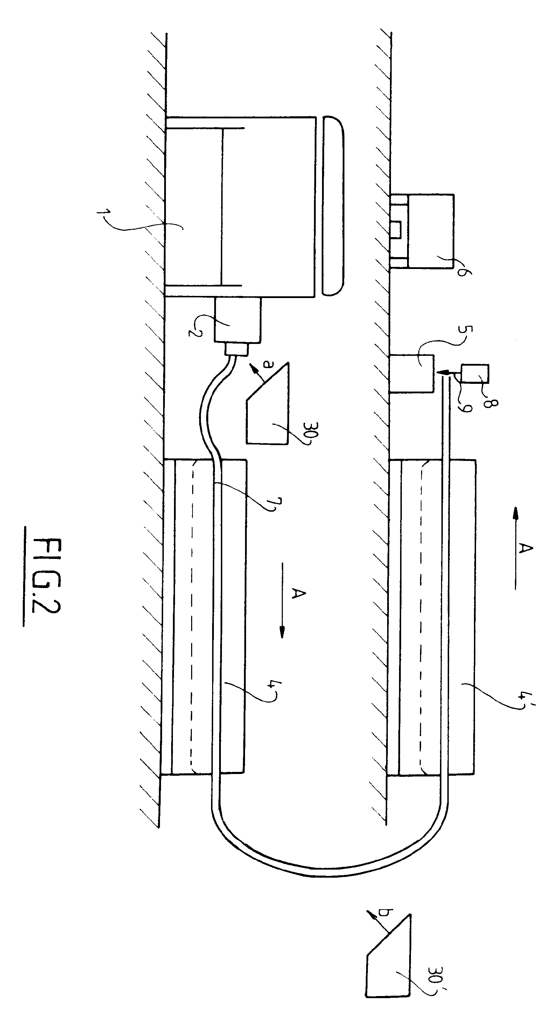

Selon la figure 2, l'installation comporte, à la sortie de la filière à calibre variable 2, et dans le sens d'avancement A de la matière un premier poste de pulvérisation de l'agent anti-adhérent 30, un premier poste de refroidissement 4, un second poste de pulvérisation d'agent anti-adhérent 30', un second poste de refroidissement 4', ainsi que des postes 5 de découpe des fragments et de conditionnement 6 similaires à ceux représentés sur la figure 1.

Conformément à la figure 2, le cordon 7 sortant de la filière 2 passe directement au droit du premier poste de pulvérisation 30 constitué par une buse de pulvérisation qui pulvérise, sur l'une de ses faces, selon la flèche a une fine pellicule poudreuse ; le cordon 7 est ensuite dirigé vers le premier poste de refroidissement 4 avant d'être conduit au droit du second poste de pulvérisation 30' ou une seconde buse de pulvérisation pulvérise selon la flèche b une fine pellicule d'un agent anti-adhérent sur sa face non traitée au niveau du premier poste de pulvérisation 30. Il passe ensuite dans le second poste de refroidissement 4' avant d'être conduit au poste de découpe 5, puis au poste de conditionnement 6.

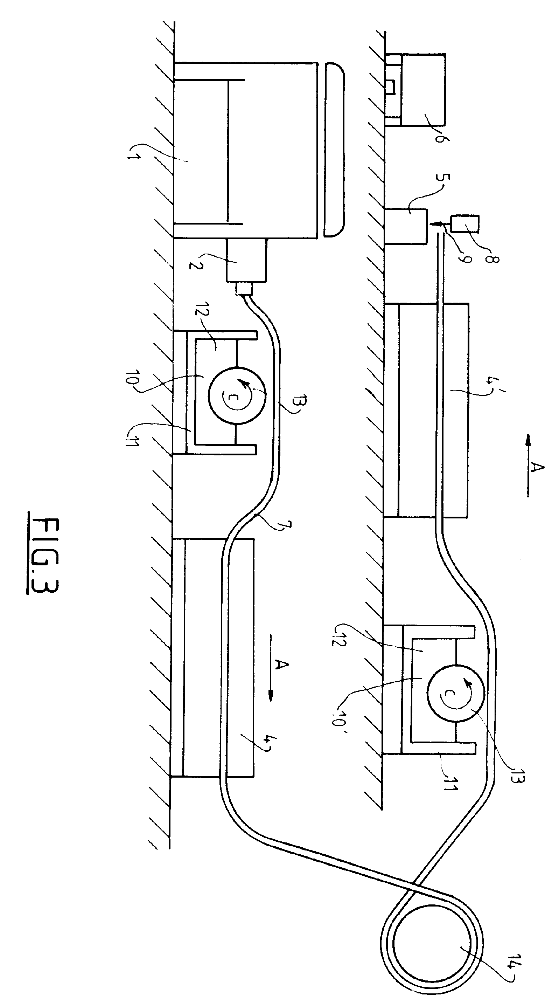

Le dispositif représenté sur la figure 3 est largement similaire à celui représenté sur la figure 2, si ce n'est que les deux postes de pulvérisation 30, 30' sont remplacés par deux postes d'enduction 10, 10'.

Chacun des postes 10, 10' est constitué par un bac de fusion 11 à parois chauffées qui contient l'agent anti-adhérent 12 et dans lequel plonge un système d'enduction par cylindre chauffé qui est représenté schématiquement. La rotation du cylindre enducteur 13, selon la flèche C, permet de disposer une couche d'agent anti-adhérent sur l'une des faces du cordon 7. Pour permettre de traiter les deux phases de celui-ci, il est nécessaire de retourner celui-ci sur une roue directrice 14.

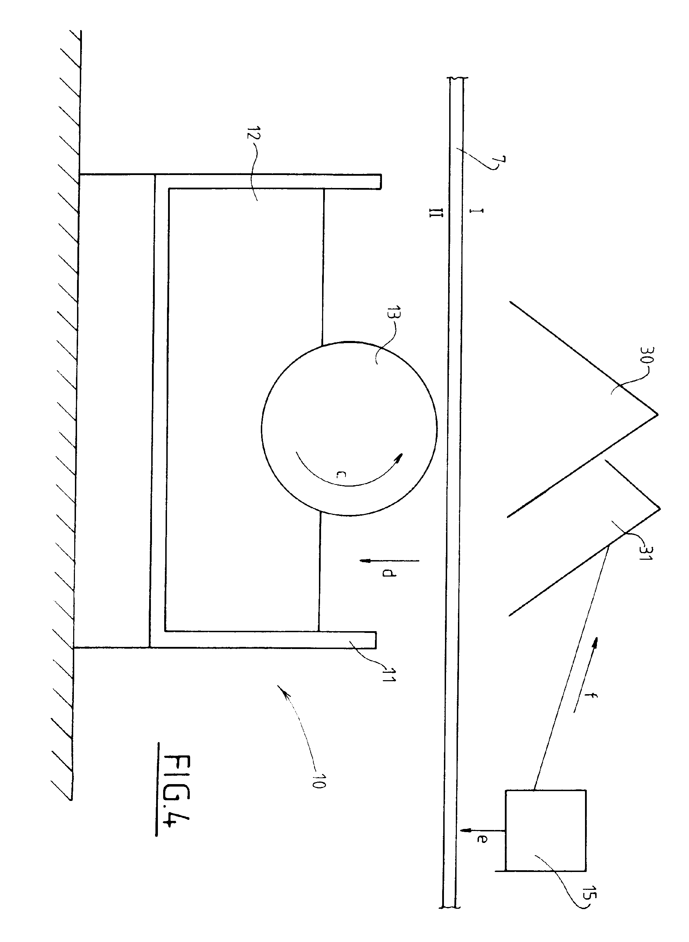

Selon la figure 4, la combinaison d'une buse de pulvérisation 30 et d'un dispositif d'enduction 10 constitué par un bac de fusion à parois chauffées 11 contenant l'agent anti-adhérent 12 et dans lequel plonge un cylindre enducteur 13 permet d'effectuer simultanément l'application de l'agent anti-adhérent sur les deux faces principales I et II d'un cordon 7. Ce dispositif a pour avantage que le surplus de produit pulvérisé à partir de la buse 30 retombe selon la flèche d dans le bac de fusion 11. De manière non représentée, cette variante permet également de traiter les côtés du cordon 7.

Par ailleurs, il est prévu un détecteur 15 qui détecte selon la flèche e l'état de surface de la face supérieure I du cordon 7 en aval de la buse de pulvérisation 30. Celui-ci coopère avec une buse de pulvérisation de secours 31 qui est automatiquement mise en marche selon la flèche f en réponse à la détection selon la flèche e d'un état de surface non satisfaisant correspondant à un début de colmatage de la buse 30.

## Revendications

1. Procédé de traitement anti-adhérent en continu d'un adhésif thermofusible collant en surface, caractérisé en ce que l'on applique un revêtement d'un agent anti-adhérent compatible avec l'adhésif thermofusible et n'entraînant pas de modification physico-chimique significative de celui-ci sur au moins une partie de la surface d'un cordon de cet adhésif sortant en continu d'un mélangeur extrudeur ou d'une filière, à une température supérieure à sa température de ramollissement, on refroidit le cordon ainsi revêtu puis on le découpe à la longueur souhaitée et on conditionne directement les fragments ainsi obtenus,, sans prendre de précautions supplémentaires.

2. Procédé selon la revendication 1, caractérisé en ce que l'adhésif thermofusible appartient au groupe constitué par des adhésifs thermofusibles à base d'EVA, de copolymères styrènebutadiène-styrène (SBS), de styrène-isoprène-styrène (SIS), de latex, d'élastomères de synthèse, de résines de dérivés de copolymères styrène-éthylène-butylène (SEB) et/ou de styrène-éthylène-butylène-styrène (SEBS), de copolymères vinyliques partiellement cristallins de polyester et par toutes les combinaisons de ces polymères ou copolymères avec adjonction éventuelle de termonomères de nature diverses.

3. Procédé selon l'une quelconque des revendications 1 et 2, caractérisé en ce que l'on effectue le refroidissement du cordon dans de l'eau refroidie en une ou deux étapes, l'application du revêtement d'agent anti-adhérent pouvant être effectuée en amont du refroidissement et/ou entre les deux étapes de refroidissement.

4. Procédé selon l'une quelconque des revendications 1 à 3, caractérisé en ce que l'on découpe le cordon revêtu de l'agent anti-adhérent en comprimant la surface de tranchage de façon telle que ses bords adhèrent les uns contre les autres, permettant ainsi d'obtenir des fragments revêtus d'agent anti-adhérent sur la totalité de leur surface.

5. Procédé selon l'une quelconque des revendications 1 à 4, caractérisé en ce que l'on effectue l'application du revêtement d'agent anti-adhérent sur la surface du cordon en faisant passer celui-ci au travers d'un lit d'agent anti-adhérent fluidisé ou en suspension de manière à déposer une fine couche poudreuse à sa surface.

6. Procédé selon la revendication 5, caractérisé en ce que l'agent anti-adhérent comporte au moins un ester métallique notamment choisi dans le groupe formé par les stéarates, les octoates, les éthyl-hexanoates et les oléates de calcium, de baryum, d'aluminium et/ou de zinc.

7. Procédé selon l'une quelconque des revendications 1 à 4, caractérisé en ce que l'agent anti-adhérent est constitué d'un matériau thermofusible non auto-adhésif renfermant notamment de la cire de polyéthylène, tel qu'un mélange contenant environ 30 % de cire de polyéthylène et 70 % de copolymère de polypropylène ou d'acétate de vinyle, ou un mélange composé de caoutchoucs synthétiques et de cires.

8. Procédé selon la revendication 7, caractérisé en ce que l'on effectue l'application du revêtement d'agent anti-adhérent sur la surface du cordon par pulvérisation.

9. Procédé selon les revendications 5 et 8, caractérisé en ce qu'on combine l'application du revêtement d'agent anti-adhérent par passage dans un lit fluidisé à une application de l'agent anti-adhérent par pulvérisation.

10. Procédé selon l'une quelconque des revendications 8 et 9, caractérisé en ce que l'on effectue l'application du revêtement d'agent anti-adhérent sur la surface du cordon par enduction.

11. Procédé selon la revendication 10, caractérisé en ce que l'on fait passer le cordon audessus d'au moins un bac de fusion à parois chauffées contenant l'agent anti-adhérent et dans lequel plonge un système d'enduction par cylindre chauffé.

12. Procédé selon les revendications 5, 10 et 11, caractérisé en ce qu'on combine l'application du revêtement d'agent anti-adhérent par passage dans un lit fluidisé à une application de l'agent anti-adhérent par enduction.

13. Procédé selon l'une quelconque des revendications 7 à 11, caractérisé en ce que l'on effectue l'application du revêtement d'agent anti-adhérent par pulvérisation sur une partie de la surface du cordon et par enduction sur la partie restante de cette surface.

14. Procédé selon l'une quelconque des revendications 1 à 13, caractérisé en ce que l'on applique le revêtement anti-adhérent sur une seule des faces principales du cordon et l'on assemble au moins deux cordons par leurs faces principales non revêtues qui adhérent ainsi automatiquement l'une sur l'autre de manière à obtenir un cordon d'épaisseur supérieure.

## Patentansprüche

1. Verfahren zur kontinuierlichen Antihaftbehandlung eines wärmeschmelzbaren oberflächenklebrigen Klebstoffes, dadurch gekennzeichnet, daß man einen Überzug eines Antihaftmittels, das mit dem wärmeschmelzbaren Klebstoff kompatibel ist und bei diesem keine signifikante stofflich-chemische Veränderung herbeiführt, auf zumindest einen Teil der Oberfläche eines Bandes dieses Klebstoffes aufbringt,das kontinuierlich aus einem Mischextruder oder einer Düse bei einer Temperatur austritt, die höher ist als seine Erweichungstemperatur, das so überzogene Band gekühlt, es sodann auf die gewünschte Länge geschnitten wird und die so erhaltenen Teilstücke direkt konditioniert werden, ohne zusätzliche Vorkehrungen zu treffen.

2. Verfahren nach Anspruch 1, dadurch gekennzeichnet, daß der wärmeschmelzbare Klebstoff zu der Gruppe gehört, die von wärmeschmelzbaren Klebstoffen auf der Basis von EVA, Styrol-Butadien-Styrol-Copolymeren (SBS), Styrol-Isopren-Styrol-Copolymeren (SIS), Latex, Synthese-Elastomeren, Derivatharzen, Styrol-Ethylen-Butylen-(SEB) und/oder Styrol-Ethylen-Butylen-Styrol-Copolymeren (SEBS), teilweise kristallinen Vinylcopolymeren, Polyester und von allen Kombinationen dieser Polymere oder Copolymere unter eventueller Hinzufügung von Termonomeren verschiedener Art gebildet ist.

3. Verfahren nach einem der Ansprüche 1 und 2, dadurch gekennzeichnet, daß die Kühlung des Bandes in gekühltem Wasser in einer oder zwei Stufen durchgeführt wird, wobei die Aufbringung des Antihaftmittelüberzugs bewegungsaufwärts der Kühlung und/oder zwischen den beiden Kühlstufen durchgeführt werden kann.

4. Verfahren nach einem der Ansprüche 1 bis 3, dadurch gekennzeichnet, daß das mit dem Antihaftmittel überzogene Band abgeschnitten wird, indem die Schnittfläche derart zusammengedrückt wird, daß ihre Ränder aneinander haften, was es so ermöglicht, Teilstücke zu erhalten, die auf der Gesamtheit ihrer Oberfläche mit dem Antihaftmittel bedeckt sind.

5. Verfahren nach einem der Ansprüche 1 bis 4, dadurch gekennzeichnet, daß das Aufbringen des Antihaftmittelüberzugs auf die Oberfläche des Bandes durchgeführt wird, indem man dieses durch ein Wirbelbett oder eine Suspension des Antihaftmittels in der Weise durchlaufen läßt, daß eine feine Pulverschicht auf seiner Oberfläche abgelegt wird.

6. Verfahren nach Anspruch 5, dadurch gekennzeichnet, daß das Antihaftmittel zumindest einen Metallester umfaßt, insbesondere ausgewählt aus der Gruppe, die von den Stearaten, Octoaten, Ethyl-Hexanoaten und Oleaten von Calcium, Barium, Aluminium und/oder Zink gebildet ist.

7. Verfahren nach einem der Ansprüche 1 bis 4, dadurch gekennzeichnet, daß das Antihaftmittel von einem nicht selbsthaftenden wärmeschmelzbaren Material gebildet ist, insbesondere von Polyethylenwachs, wie einer Mischung mit etwa 30% Polyethylenwachs und 70% eines Copolymers von Polypropylen oder Vinylacetat, oder einer aus synthetischen Kautschuken und Wachsen zusammengesetzten Mischung.

8. Verfahren nach Anspruch 7, dadurch gekennzeichnet, daß die Aufbringung des Antihaftmittelüberzugs auf die Oberfläche des Bandes durch Zerstäubung erfolgt.

9. Verfahren nach den Ansprüchen 5 und 8, dadurch gekennzeichnet, daß die Aufbringung des Antihaftmittelüberzugs durch Durchgang durch ein Wirbelbett mit einer Aufbringung des Antihaftmittels durch Zerstäubung kombiniert wird.

10. Verfahren nach einem der Ansprüche 8 und 9, dadurch gekennzeichnet, daß die Aufbringung des Antihaftmittelüberzugs auf die Oberfläche des Bandes durch Beschichtung erfolgt.

11. Verfahren nach Anspruch 10, dadurch gekennzeichnet, daß man das Band über zumindest einen Schmelzbehälter mit erwärmten Wänden laufen läßt, in dem das Antihaftmittel enthalten ist und in den ein Beschichtungssystem mit erwärmtem Zylinder eintaucht.

12. Verfahren nach den Ansprüchen 5, 10 und 11, dadurch gekennzeichnet, daß die Aufbringung des Antihaftmittelüberzugs durch Durchgang durch ein Wirbelbett mit einer Aufbringung des Antihaftmittels durch Beschichtung kombiniert wird.

13. Verfahren nach einem der Ansprüche 7 bis 11, dadurch gekennzeichnet, daß die Aufbringung des Antihaftmittelüberzugs durch Zerstäubung auf einen Teil der Oberfläche des Bandes und durch Beschichtung auf den verbleibenden Teil dieser Oberfläche erfolgt.

14. Verfahren nach einem der Ansprüche 1 bis 13, dadurch gekennzeichnet, daß der Antihaftüberzug nur auf eine der Hauptflächen des Bandes aufgetragen wird und zumindest zwei Bänder mit ihren nicht überzogenen Hauptflächen verbunden werden, die auf diese Weise automatisch aneinander anhaften, derart, daß man ein Band mit größerer Dicke erhält.

## Claims

1. Method for continuous anti-adhesive treatment of a superficially sticky hot-melt adhesive, characterised in that a covering is applied of an anti-adhesive agent compatible with the hot-melt adhesive and not entailing any significant physico-chemical modification of it over at least part of the surface of a cord of this adhesive emerging continuously from a mixer-extruder or from a die at a temperature above its softening temperature, in that the cord thus covered is cooled and is then cut to the required length, and in that the fragments obtained in this way are packaged directly, without taking any additional precautions.

2. Method according to Claim 1, characterised in that the hot-melt adhesive belongs to the group formed by hot-melt adhesives based on EVA, styrene-butadiene-styrene (SBS) copolymers, styrene-isoprene-styrene (SIS), latex, synthetic elastomers, resins which are derivatives of styrene-ethylene-butylene (SEB) copolymers and/or of styrene-ethylene-butylene-styrene (SEBS), partially crystalline vinyl copolymers of polyester and on all combinations of these polymers or copolymers with the possible addition of termonomers of various kinds.

3. Method according to either of Claims 1 and 2, characterised in that the cord is cooled in cold water in one or two stages, the covering of anti-adhesive agent being able to be applied before the cooling and/or between the two cooling stages.

4. Method according to any one of Claims 1 to 3, characterised in that the cord covered with the anti-adhesive agent is cut by compressing the surface where the cuts are to be made in such a way that its edges adhere to each other, thus making it possible to obtain fragments covered with anti-adhesive agent over the whole of their surface.

5. Method according to any one of Claims 1 to 4, characterised in that the covering of anti-adhesive agent is applied to the surface of the cord by making the latter pass across a bed of anti-adhesive agent which is fluidised or is held in suspension so as to deposit a fine powdery layer on its surface.

6. Method according to Claim 5, characterised in that the anti-adhesive agent comprises at least one metallic ester chosen particularly from the group formed by stearates, octanoates, ethyl-hexanoates and oleates of calcium, barium, aluminium and/or of zinc.

7. Method according to any one of Claims 1 to 4, characterised in that the anti-adhesive agent consists of a non-self-adhesive hot-melt material particularly one containing polyethylene wax, such as a mixture containing about 30% polyethylene wax and 70% of polypropylene copolymer or of vinyl acetate copolymer, or a mixture composed of synthetic rubbers and waxes.

8. Method according to Claim 7, characterised in that the covering of anti-adhesive agent is applied to the surface of the cord by spraying.

9. Method according to Claims 5 and 8, characterised in that the application of the covering of anti-adhesive agent by passage through a fluidised bed is combined with an application of the anti-adhesive agent by spraying.

10. Method according to either of Claims 8 and 9, characterised in that the covering of anti-adhesive agent is applied to the surface of the cord by coating.

11. Method according to Claim 10, characterised in that the cord is made to pass over at least one melting tank with heated walls which contains the anti-adhesive agent and in which a heated-cylinder coating system is immersed.

12. Method according to Claims 5, 10 and 11, characterised in that the application of the covering of anti-adhesive agent by passage through a fluidised bed is combined with an application of the anti-adhesive agent by coating.

13. Method according to any one of Claims 7 to 11, characterised in that the covering of anti-adhesive agent is applied by spraying over part of the surface of the cord and by coating over the remaining part of this surface.

14. Method according to any one of Claims 1 to 13, characterised in that the covering of anti-adhesive agent is applied to only one of the main faces of the cord and in that at least two cords are assembled by their main non-covered faces, which thus adhere automatically to each other so as to obtain a cord of greater thickness.
